(19) Europäisches Patentamt
European Patent Office
Office européen des brevets

(11) Veröffentlichungsnummer: **0 281 954 A1**

# (12) EUROPÄISCHE PATENTANMELDUNG

(21) Anmeldenummer: **88103324.5**

(22) Anmeldetag: **04.03.88**

(51) Int. Cl.⁴: **C08G 69/32**, C08G 69/26

(30) Priorität: **07.03.87 DE 3707435**

(43) Veröffentlichungstag der Anmeldung: **14.09.88 Patentblatt 88/37**

(84) Benannte Vertragsstaaten: **BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

Anmelder: **DAICEL CHEMICAL INDUSTRIES, LTD.**
**Tokyo Head Office 8-1, Kasumigaseki 3-chome**
**Chiyoda-Ku Tokyo 100(JP)**

(72) Erfinder: **Bartmann, Martin, Dr.**
**Burgstrasse 35**
**D-4350 Recklinghausen(DE)**
Erfinder: **Ikeda, Naoki**
**Kamiyobe 500 Yobe-ku, Himeji**
**Hyogo 671-12(JP)**

(74) Vertreter: **Patentanwälte Grünecker, Kinkeldey, Stockmair & Partner**
**Maximilianstrasse 58**
**D-8000 München 22(DE)**

## (54) Aromatische Polyamide auf Basis von Phenoxyterephthalsäure und Verfahren zu ihrer Herstellung.

(57) Die technisch verfügbaren polymeren Amide erfüllen noch nicht hinreichend die Anforderungen der Praxis (hohe Glastemperatur, unzersetzt schmelzbar, im Spritzguß verarbeitbar, in üblichen organischen Lösemitteln löslich, transparent).

Polyamide bzw. Copolyamide auf Basis von Phenoxyterephthalsäure sind chemikalienbeständig und problemlos thermoplastisch verarbeitbar.

Herstellung von Fasern und Folien.

EP 0 281 954 A1

## Aromatische Polyamide auf Basis von Phenoxyterephthalsäure und Verfahren zu ihrer Herstellung

Aromatische Polyamide zeichnen sich durch hohe Temperaturbeständigkeit und gute mechanische Eigenschaften aus. Sie werden insbesondere zur Herstellung von Fasern und Folien eingesetzt (s. Elias/Vohwinkel, "Neue polymere Werkstoffe für die industrielle Anwendung", 2. Folge, Carl Hanser Verlag 1983, Seite 242 ff.).

Die technisch verfügbaren Produkte auf Basis von aromatischen Dicarbonsäuren und aromatischen Diaminen erfüllen noch nicht hinreichend die Anforderungen, die in der Praxis gestellt werden. So besitzen die Polyamide auf Basis von Terephthalsäure und Paraphenylendiamin bzw. Isophthalsäure und Metaphenylendiamin, wie z. B. Kevlar$^{R}$ bzw. Nomex$^{R}$, zwar eine hohe Glastemperatur; sie sind aber nur unter Zersetzung schmelzbar. Es ist daher nicht möglich, diese Produkte im Spritzguß zu verarbeiten, d. h. sie sind nicht thermoplastisch verarbeitbar. Schließlich besteht ein großer Nachteil darin, daß diese Polyamide nur in Schwefelsäure oder wenigen speziellen, polar aprotischen Lösemitteln wie z. B. N-Methylpyrrolidon unter Zusatz von anorganischen Salzen wie Lithium-oder Calciumchlorid löslich sind.

Aus dem Stand der Technik sind Verfahren zur Herstellung von aromatischen Polyamiden bekannt. Eine gute Übersicht findet sich z. B. in GB-PS 1 547 802, J. Poly. Sci., B, 2-4, 369 (1964) und J. Poly. Sci., Poly. Chem. Ed., 24, 701 (1986). Diese Verfahren sind grundsätzlich mit den gleichen Mängeln behaftet, die vorstehend angegeben wurden. So beschreibt zwar die EP-OS 0 099 997 die direkte Herstellung in Lösung, aber die Reaktionszeiten sind außerordentlich lang, die Produkte von schlechter Farbqualität und die erreichbaren Molekulargewichte sind gering. Eine Verbesserung stellt demgegenüber das Verfahren der DE-OS 35 26 622 dar. Beide Verfahren beschreiben aber lediglich die Herstellung aromatischer Polyamide, die nicht thermoplastisch verarbeitbar sind.

Auch die bekannten amorphen Polyamide auf Basis von aromatischen Dicarbonsäuren und aliphatischen Diaminen erfüllen noch nicht hinreichend die Anforderungen der Praxis (vgl. z. B. DE-PS 26 42 244, US-PS 4 369 305 und EP-PS 0 053 876). Man ist daher gezwungen, Mischungen von Dicarbonsäuren, wie z. B. Tere-und Isophthalsäure, einzusetzen. Doch auch bei deren Einsatz gibt es noch Probleme. Bei Mischungen mit einem hohen Isophthalsäureanteil liegt der Glasumwandlungspunkt Tg zu niedrig. Umgekehrt sind die Polyamide bei hohen Terephthalsäureanteil teilkristallin und nicht mehr transparent. Es ist daher zu ihrer Herstellung erforderlich, speziell eingestellte Mischungen aus Diaminen und/oder Dicarbonsäuren einzusetzen. In einzelnen Fällen ist es notwendig, bei der Herstellung Lactame oder Omega-Aminocarbonsäuren zuzusetzen (vgl. US-PSS 3 150 117, 4 369 305, 3 840 501, 3 842 405 und 4 028 476, DE-OSS 21 56 723, 26 42 244, 29 36 750 und 36 00 015 sowie EP-OS 53 876 und Angew. Makromol. Chem. 98, 225 (1981).

Ziel der Erfindung war es daher, aromatische und aromatisch-aliphatische Polyamide bzw. Copolyamide mit verbesserten Eigenschaften bereitzustellen. Es wurde jetzt gefunden, daß man solche Polymeren erhält, wenn man als Säurekomponente eine Phenoxyterephthalsäure einsetzt und als Aminokomponente von Diaminen der Formel $NH_2$ -R - $NH_2$ ausgeht, wobei R für einen geradkettigen, verzweigten oder cyclischen Alkylenrest mit 2 bis 20 C-Atomen oder einen 2-wertigen aromatischen Rest der allgemeinen Formel

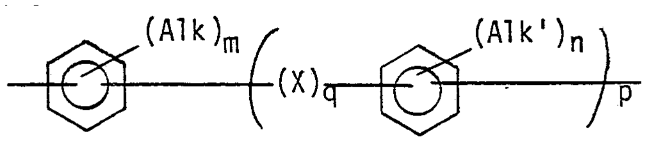 oder 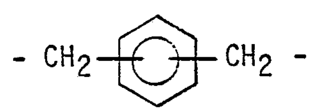

steht. Alk und Alk' bedeuten gleiche oder verschiedene Alkylreste mit bis zu 6 C-Atomen. X steht für die 2-wertigen Reste -O-, -S-, -CO-, $-CH_2-$, $-C(CH_3)_2-$oder $-SO_2-$. p und q sind unabhängig voneinander 0 oder 1 und m und n unabhängig voneinander 0 oder 1 oder 2.

Die Phenoxyterephthalsäure weist die Formel

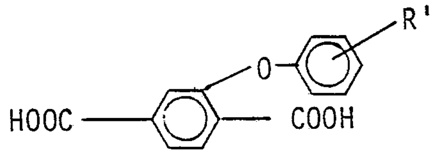

auf. Hierbei steht R' für Wasserstoff, ein Halogen wie z. B. Chlor, einen Alkyl-, Aryl-, Alkyloxy-oder Aryloxyrest mit jeweils bis zu 12 C-Atomen.

Gegenstand der Erfindung sind ferner die Verfahren zur Herstellung dieser Polyamide bzw. Copolyamide. Diese zeichnen sich dadurch aus, daß man die Diamine und die Dicarbonsäure in Lösung bei erhöhter Temperatur in Gegenwart von Katalysatoren umsetzt. Man kann auch von den Diaminen und dem Dicarbonsäuredichlorid ausgehen.

Die Polyamide auf Basis aliphatischer Diamine können auch durch übliche Schmelzpolykondensation sowie durch Umsetzung der Diaminemit den Dicarbonsäuredichloriden bei tiefer Temperatur hergestellt werden.

Mit der Erfindung werden folgende Vorteile erzielt:

- Die Polyamide bzw. Copolyamide auf Basis aromatischer Diamine sind nicht nur beständig gegenüber Wasser und Chemikalien und weisen einen hohen Erweichungspunkt auf, wie dies von analogen Verbindungen bekannt war; sie sind vielmehr auch thermoplastisch verarbeitbar.
- Die Polyamide auf Basis aliphatischer Diamine sind durchweg amorph und gut zu verarbeiten. Der Schmelzpunkt liegt unterhalb der Zersetzungstemperatur.
- Die Erfindung eröffnet den Weg zu amorphen aromatisch-aliphatischen Polyamiden bzw. Copolyamiden mit Glasumwandlungspunkten bis zu 220 °C, die nach dem Stand der Technik nicht oder nur in komplizierten Abmischungen zugänglich waren.
- Das Verfahren zeichnet sich durch seine Einfachheit aus.

Phenoxyterephthalsäure ist eine leicht zugängliche Substanz (s. J. Poly. Sci., Poly Chem. Ed., 18 3069 (1980).

Die substituierten Phenoxyterephthalsäuren sind beispielsweise durch Umsetzung von Nitrophthalsäure mit den entsprechend substituierten Phenolen leicht herzustellen.

Als Beispiele für Diamine, die erfindungsgemäß einsetzbar sind, seien erwähnt

- aliphatische Diamine mit 2 bis 20 C-Atomen, die geradkettig oder verzweigt sein können, wie z. B. Hexamethylendiamin, 2,2,4-Trimethylhexamethylendiamin
- cycloaliphatische Diamine wie z. B. Isophorondiamin und Bis(p-aminocyclohexyl)-methan
- einkernige aromatische Diamine der Formel

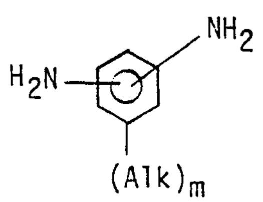

und

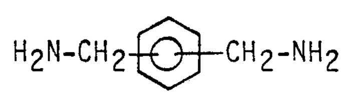

wobei m = 0 oder 1, wie z. B. m-Phenylendiamin

- zweikernige aromatische Diamine der Formel

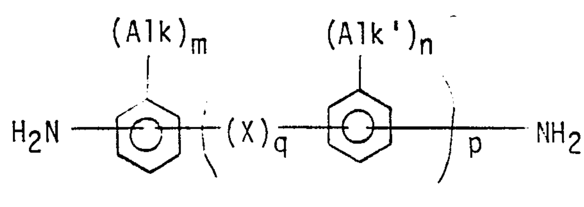

mit p oder q = 0 oder 1 und m und n = 0, 1 oder 2. Alk und Alk' stehen für 2 gleiche oder unterschiedliche Alkylreste mit maximal 6 C-Atomen.

X hat die Bedeutung folgender 2-wertiger Reste:

$-O-$, $-S-$, $-SO_2-$, $-CO-$, $-C(CH_3)_2-$, $-CH_2-$

Beispielhaft aufgeführt sei 4,4'-Diaminodiphenylether. Bevorzugt sind Hexamethylendiamin und m-Xylylendiamin, Bis(p-aminocyclohexyl)methan, m-Phenylendiamin und deren Mischungen.

Die Polyamide können nach folgenden Verfahren herstellt werden:

## 1. Kondensation in Lösung

Man setzt ungefähr äquimolare Mengen der beiden Ausgangskomponenten in einem polar aprotischen Lösemittel in Gegenwart eines Phosphorkatalysators und gegebenenfalls eines Cokatalysators auf Basis eines 4-Dialkylaminopyridins um.

Der Phosphorkatalysator umfaßt Verbindungen der Typen $PZ_5$, $PZ_3$, $HPZ_2$ sowie die Anhydride $P_2O_5$ und $P_2O_3$. Dabei steht Z für ein Halogen wie Chlor oder Brom, die OH-Gruppe, die Gruppe OAr, wobei Ar ein gegebenenfalls alkylsubstituierter Phenylrest ist, oder den Alkoxyrest mit 1 bis 10 C-Atomen. Beispielhaft seien Phosphorsäure, hypophosphorige Säure und Triphenylphosphit aufgeführt.

Die als Cokatalysator eingesetzten 4-Dialkylaminopyridine weisen die Struktur

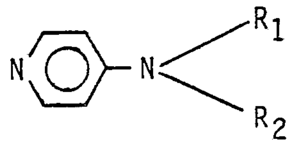

auf, wobei $R_1$ und $R_2$ unabhängig voneinander für einen $C_{1-10}$-Alkylrest stehen oder zusammen mit dem Aminostickstoff einen Pyrrolidin-oder Piperidinring bilden können. Bevorzugt ist 4-Dimethylaminopyridin.

Die Pyridinderivate können gemäß Synthesis 844, (1978), hergestellt werden.

Bezogen auf 100 Mole eingesetzter Dicarbonsäure werden jeweils 0,1 bis 10 Mole, vorzugsweise 0,2 bis 5 Mole der P-Verbindung und gegebenenfalls des 4-Dialkylaminopypridins eingesetzt. Die Polykondensation wird bei einer Temperatur zwischen 180 und 300 °C, vorzugsweise zwischen 200 und 260 °C, durchgeführt.

Üblicherweise arbeitet man unter Inertgas bei Normaldruck. Es kann jedoch, wenn dies aus irgendwelchen Gründen wünschenswert sein sollte, auch bei leichtem Über-oder Unterdruck gearbeitet werden. Die zur Erzielung ausreichend hochmolekularer Produkte notwendigen Reaktionzei ten liegen im allgemeinen zwischen 1 und 4 Stunden. Lediglich bei sehr reaktionsträgen Ausgangsverbindungen können auch deutlich längere Zeiten erforderlich sein.

Als Reaktionsmedium werden polare, aprotische, organische Lösemittel bevorzugt, die imstande sind, zumindest bei 180 °C die Ausgangsprodukte wie auch die polymeren Amide hinreichend zu lösen. Beispiele geeigneter Lösungsmittel sind N-Methylpyrrolidon-2 (NMP), N-Methyl-3-caprolactam, N,N-Dimethylacetamid, Dimethylsulfoxid, Diphenylsulfon und insbesondere Sulfolan (Tetrahydrothiophendioxid). Diese Lösungsmittel können allein oder als Mischung eingesetzt werden. Beispiele anderer Lösungsmittel, die in Kombination mit den oben erwähnten polaren, aprotischen Lösungsmitteln eingesetzt werden können, sind Chlorbenzol, Dichlorbenzol, Nitrobenzol, Diphenylether, Anisol, Phenol und m-Kresol. Der Anteil der aprotischen, polaren Lösungsmittel sollte in diesen Mischungen mindestens 20 Gew.-% betragen.

Vorzugsweise wird das Verfahren in folgender Weise durchgeführt:

Man erhitzt die Lösung aus etwa äquimolaren Mengen aromatischer Dicarbonsäure und Diamin in Gegenwart der Phosphorverbindung und des 4-Dialkylaminopyridins bei einer Feststoffkonzentration von 5 bis 50 Gew.-% in einer Inertgasatmosphäre auf Temperaturen zwischen 200 und 260 °C, hält diese Temperatur etwa 1 bis 3 Stunden und isoliert sodann das Polyamid nach üblichen Verfahrensweisen.

Zur Herstellung von ausreichend hochmolekularen Produkten ist es notwendig, das während der Polykondensation gebildete Wasser aus dem Reaktionssystem zu entfernen. Gewöhnlich reicht hierzu das Über-bzw. Durchleiten des Inertgases aus. Es kann jedoch auch Vakuum angelegt und/oder durch (Azotrop)-Destillation ein Teil des Lösungsmittels zusammen mit dem Wasser entfernt werden.

Am Ende der Polykondensation erhält man eine mehr oder weniger viskose Lösung oder eine Suspension des Polymeren im eingesetzten Lösungsmittel. Die Isolierung der aromatischen Polyamide aus diesen Lösungen bzw. Suspensionen ist nicht kritisch; sie können entweder direkt weiterverarbeitet oder gegebenenfalls nach Verdünnung durch Zugabe von Antilösungsmittel gefällt werden.

Als Antilösungsmittel kommen niedrige Alkohole wie z. B. Methanol, Ethanol und Isopropanol, Ketone wie z. B. Aceton und Methylethylketon oder Wasser bzw. deren Mischungen in Frage.

**2. Kondensation in der Schmelze**

Das Verfahren der Kondensation in der Schmelze entspricht dem üblichen Verfahren zur Herstellung von Polyamid-6,6. In diesem Falle stellt man zunächst in alkoholischer Lösung ein Salz aus der Dicarbonsäure und dem Diamin her und isoliert dies. Anschließend wird das Salz bei Normaldruck erhitzt, wobei man einen kräftigen Inertgasstrom über oder durch das Reaktionsgemisch leitet und auf diese Weise Wasser entfernt. Man kann die Polykondensation auch unter erhöhtem Druck, z. B. in einem Autoklaven, durchführen.

**3. Polykondensation durch Reaktion zwischen einem aromatischen Dicarbonsäuredichlorid und einem Diamin.**

Dieses Verfahren wird z. B. beschrieben in den DE-OSS 19 08 297 und 30 06 899 sowie in J. Polym. Sci. XL, 343 (1959) und J. Polym. Sci. B 2 - 4, 369 (1964).

Sofern nicht anders angegeben, wurde die reduzierte Viskosität ($\eta_{rel}$-1)/C in Mischungen aus 50 Volumenprozent Phenol und 50 Volumenprozent Dichlorbenzol bei 25 °C bestimmt.

Beispiel 1

Eine Mischung aus
7 g Phenoxyterephthalsäure,
2,96 g m-Phenlyendiamin,
0,17 g 50 %iger wäßriger $HPO_2$,
0,17 g 4-Dimethylaminopyridin und
20 ml Sulfolan
wird in einem Kolben unter Rühren in einer Stickstoffatmosphäre erst 1 Stunde bei 230 °C und dann 2 Stunden bei 250 °C erhitzt. Die auf 180 °C abgekühlte, viskose Reaktionsmischung wird mit 100 ml N-Methylpyrrolidon verdünnt. Nach 30 Minuten läßt man die Reaktionsmischung auf Raumtemperatur abkühlen und gießt sie unter starkem Rühren in 2 000 ml Methanol. Das ausgefallene Polymer wird mit heißem Methanol gewaschen und im Vakuum bei einer Temperatur von 100 °C getrocknet.

Man erhält 8,5 g eines gelben Pulvers in einer Ausbeute von 95 %. Der Glasübergangspunkt Tg beträgt 229 °C. Die reduzierte Viskosität beträgt 0,72 dl/g.

Das Polymer wird in Dimethylacetamid aufgelöst. Aus dieser Lösung erhält man einen hellgelben, transparenten Film.

Durch Formpressen bei 280 °C und 50 bar erhält man innerhalb von 5 Minuten eine hellgelbe Preßplatte von 90 mm Länge, 15 mm Breite und 1 mm Dicke.

Beispiel 2

Analog zu Beispiel 1 werden
7 g Phenoxyterephthalsäure,
0,89 g p-Phenlyendiamin,
3,84 g 4,4'-Diaminodiphenylether,
0,17 g 50 %iger wäßrige $H_3PO_2$, 0,17 g 4-Dimethylaminopyridin und
20 ml Sulfolan
umgesetzt. Man erhält in einer Ausbeute von 99 % 10,6 g eines weißen Pulvers mit einem Glasübergangspunkt von 203 °C. Die reduzierte Viskosität beträgt 1,40 dl/g.

Aus Lösungen des Polymeren in N-Methylpyrrolidon oder Dimethylacetamid erhält man hellgelbe, transparente Filme. Durch Formpressen wie in Beispiel 1 erhält man eine hellgelbe Preßplatte.

Beispiel 3

Zu einer Lösung von 20 g Calciumchlorid in 140 ml N-Methylpyrrolidon setzt man 1,83 g p-Phenylendiamin und 1,83 g m-Phenlyendiamin und kühlt diese Mischung auf 0 °C. Unter kräftigem Rühren gibt man hierzu 10 g Phenoxyterephthaloylchlorid. Man setzt das Rühren weitere 12 Stunden bei Raumtemperatur fort. Dann wird die Reaktionsmischung in einem Überschuß kaltes Wasser gegossen, wobei ein Niederschlag ausfällt, der nach 2 maligem Waschen mit je 1 l heißem Wasser und heißem Methanol im Vakuum bei 80 °C getrocknet wird. Man erhält in einer Ausbeute von 94 % 10,5 g eines gelben Pulvers mit einem Glasübergangspunkt von 229 °C. Die reduzierte Viskosität beträgt 0,50 dl/g. Durch Formpressen unter den gleichen Bedingungen wie in Beispiel 1 erhält man eine Preßplatte ähnlicher Beschaffenheit.

Beispiel 4

Zu einer Lösung von 10 g Phenoxyterephthalsäure in 350 ml absolutem Ethanol tropft man eine Lösung von 4,6 g Hexamethylendiamin in 50 ml Ethanol und rührt die Mischung 30 Minuten bei 50 °C. Das ausgefallene Salz wird warm abfiltriert, 3 mal mit frischem Ethanol gewaschen und im Vakuum getrocknet. Man erhält 14,5 g eines weißen Salzes mit einem Schmelzpunkt von etwa 270 °C. Man bringt das Salz in einen Kolben in eine möglichst reine Stickstoffatmosphäre, erhitzt es 1 Stunde auf 270°C, 3 Stunden auf 280 °C und nimmt es dann möglichst schnell aus dem Kolben heraus. Man erhält ein transparentes Polymer mit einem Glasübergangspunkt von 108 °C und einer reduzierten Viskosität von 0,68 dl/g. Durch Formpressen bei 200 °C und 50 bar erhält man innerhalb von 5 Minuten eine hellgelbe, transparente Preßplatte.

Beispiel 5

Eine Mischung aus
15 g Phenoxyterephthalsäure,
12,5 g Bis(4-aminocyclohexyl)methan,
0,36 g 50 %ige wäßrige $H_3PO_2$,
0,36 g 4-Dimethylaminopyridin und
60 ml Sulfolan
wird in einen Kolben vorgelegt und unter Stickstoff 1 Stunde bei 230 °C und 45 Minuten bei 250 °C erwärmt.

Die auf 180 °C abgekühlte, viskose Reaktionsmischung wird mit 200 ml N-Methylpyrrolidon verdünnt. Nach 30 Minuten läßt man die Reaktionsmischung auf Raumtemperatur abkühlen und gießt sie in 4 l kaltes Wasser. Der Niederschlag wird mit je 1 l heißem Wasser und heißem Methanol gewaschen und im Vakuum bei 90 °C getrocknet. Man erhält in einer Ausbeute von 96 % 24 g eines weißen körnigen Materials mit einem Glasübergangspunkt von 206 °C und einer reduzierten Viskosität von 1,58 dl/g. Durch Formpressen unter den gleichen Bedingungen wie in Beispiel 1 erhält man eine transparente Preßplatte.

Beispiel 6

Eine Mischung aus
10 g Phenoxyterephthalsäure,
5,4 g m-Xylylendiamin,
0,24 g 50 %ige, wäßrige $H_3PO_2$,
0,24 g 4-Dimethylaminopyridin und
70 ml Sulfolan
wird unter Stickstoff in einem Kolben zuerst 2 Stunden bei 230 °C und dann 1 Stunde bei 250 °C gehalten. Die auf 180 °C abgekühlte, viskose Reaktionsmischung wird mit 120 ml N-Methylpyrrolidon verdünnt. Nach 30 Minuten läßt man die Mischung auf Raumtemperatur abkühlen, gießt sie in kaltes Wasser und wäscht den Niederschlag 2 mal mit heißem Wasser und heißem Methanol. Nach Trocknung im Vakuum bei 90 °C erhält man 13 g eines leicht gelben, polymeren, körnigen Materials in einer Ausbeute von 95 %. Der Glasübergangspunkt beträgt 146 °C, die reduzierte Viskosität 1,66 dl/g.

Beispiel 7

Eine Lösung von 5 g Phenoxyterephthalsäure in 50 ml Dichlormethan wird in einem 200 ml-Kolben vorgelegt. Eine Lösung von 2,4 g m-Xylylendiamin und 3,8 g Natriumcarbonat in 50 ml Wasser wird langsam auf die Oberfläche der organischen Phase getropft. Der sich sofort an der Grenzfläche zwischen den beiden Phasen bildende Film wurde abgezogen und mit siedenem Aceton gewaschen. Das nach Trocknung bei 90 °C isolierte, weiße Produkt besitzt eine Glasübergangstemperatur von 145 °C. Seine reduzierte Viskosität, gemessen in konzentrierter Schwefelsäure bei 25 °C, beträgt 1,32 dl/g.

**Ansprüche**

1. Polyamide bzw. Copolyamide auf Basis von aromatischen Dicarbonsäuren und aromatischen und/oder aliphatischen Diaminen
dadurch gekennzeichnet,
daß das Polyamid Struktureinheiten der allgemeinen Formel
(CO - Ar - CO - NH - R - NH ),
aufweist,
- wobei Ar für den 2-wertigen Rest der Formel

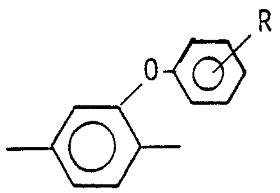

steht und
- wobei R für einen geradkettigen, verzweigten oder cyclischen Alkylrest mit 2 bis 20 C-Atomen oder einen 2-wertigen aromatischen Rest der allgemeinen Formel

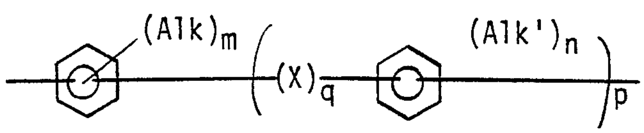

oder

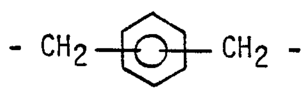

steht, Alk und Alk' gleiche oder verschiedene Alkylreste mit bis zu 6 C-Atomen bedeuten, X für die 2-wertigen Reste -O-, -S-, $-CH_2-$, $-CH(CH_3)_2-$, -CO-oder $-SO_2$-steht und p und q unabhängig voneinander 0 oder 1 und m und n unabhängig voneinander 0 oder 1 oder 2 bedeuten und
- wobei R' Wasserstoff, ein Halogen, ein Alkyl-, ein Aryl-, ein Alkoxy-oder Aryloxyrest mit jeweils bis zu 12 C-Atomen bedeutet.

2. Polyamide nach Anspruch 1,
dadurch gekennzeichnet,
daß R für den meta-Phenylenrest steht.

3. Polyamide nach Anspruch 1,
dadurch gekennzeichnet,
daß R für den Rest

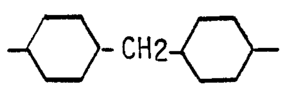

steht.

4. Verfahren zur Herstellung von Polyamiden gemäß den Ansprüchen 1 bis 3, dadurch gekennzeichnet, daß man die entsprechenden Diamine und die Dicarbonsäure in Lösung bei einer Temperatur zwischen 150 und 300 °C in Gegenwart von P-haltigen Katalysatoren umsetzt.

5. Verfahren gemäß Anspruch 4, dadurch gekennzeichnet, daß man als P-haltigen Katalysator Triphenylphosphit, phosphorige Säure oder hypophosphorige Säure einsetzt.

6. Verfahren gemäß den Ansprüchen 4 und 5, dadurch gekennzeichnet, daß man die Umsetzung zusätzlich in Gegenwart katalytischer Mengen eines 4-Dialkylaminopyridins durchgeführt.

7. Verfahren zur Herstellung von Polyamiden gemäß den Ansprüchen 1 bis 3, dadurch gekennzeichnet, daß man die entsprechenden Diamine mit dem entsprechenden Dicarbonsäuredichlorid in Lösung umsetzt.

8. Verfahren zur Herstellung von Polyamiden auf Basis aliphatischer Diamine gemäß Anspruch 1 und 3, dadurch gekennzeichnet, daß man die entsprechenden Diamine mit der entsprechenden Dicarbonsäure in der Schmelze umsetzt.

Europäisches Patentamt

# EUROPÄISCHER RECHERCHENBERICHT

Nummer der Anmeldung

EP 88 10 3324

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 102 752 (DU PONT DE NEMOURS)<br>* Anspruch 1 *<br>--- | 1-8 | C 08 G 69/32<br>C 08 G 69/26 |
| A | JOURNAL OF POLYMER SCIENCE, POLYMER CHEMISTRY EDITION, Band 15, Nr. 10, Oktober 1977, Seiten 2535-2538, John Wiley & Sons, Inc.; F.M. SILVER et al.: "Aromatic polyamides. I. Poly-p-xylyleneterephthalamide: Synthesis, fiber spinning, and characterization"<br>* Insgesamt *<br>----- | 1-8 | |

| RECHERCHIERTE SACHGEBIETE (Int. Cl.4) |
|---|
| C 08 G |

Der vorliegende Recherchenbericht wurde für alle Patentansprüche erstellt

| Recherchenort | Abschlußdatum der Recherche | Prüfer |
|---|---|---|
| DEN HAAG | 27-05-1988 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)